# FASCICULE DE BREVET EUROPEEN

(11) **EP 0 988 785 B1**
(45) Date de publication et mention de la délivrance du brevet: **16.06.2004**
(21) Numéro de dépôt: 99440247.7
(22) Date de dépôt: 14.09.1999
(51) Int. Cl.: A01K 9/00

(54) **Station d'alimentation permettant de distribuer de la nourriture et notamment des aliments liquides à des animaux tels que des veaux**
Fütterungsvorrichtung zur Verteilung von Futter, insbesondere von Flüssigfutter für Tiere wie Kälber
Feeding station for distributing feed, in particular liquid feed, for animals like calves

(30) Priorité: 14.09.1998 FR 9811597
(43) Date de publication de la demande: 29.03.2000
(73) Titulaire: Bouffet, Pierre, 44380 Pornichet (FR)
(72) Inventeur: Bouffet, Pierre, 44380 Pornichet (FR)
(74) Mandataire: Arbousse-Bastide, Jean-Claude Philippe

(56) Documents cités:
- EP-A- 0 064 597
- WO-A-91/03930
- DE-U- 29 710 014
- FR-A- 2 689 727
- NEDAP VC: "Kalf-Code" 1997 , NEDAP VC , NL XP002103995 * le document en entier *

## Description

La présente invention a pour objet une station d'alimentation permettant de distribuer de la nourriture et notamment des aliments liquides à des animaux tels que des veaux et destinée à être intégrée dans une installation de préparation et de distribution desdits aliments dans ladite station.

Il existe déjà des installations comportant une unité de préparation d'un aliment liquide et une pluralité de stations d'alimentation reliées, par un réseau de canalisations, à l'unité de préparation et dans lesquelles les animaux peuvent se nourrir en prenant la quantité de dose alimentaire qui leur convient. Dans ces installations les aliments distribués se présentent le plus souvent sous la forme d'un lait reconstitué par mélange d'eau et d'une poudre de lait et contenu dans une cuve de l'unité de préparation.

Toutefois cette distribution s'effectue trop rapidement et ne permet pas d'obtenir une bonne solubilisation dans l'eau des éléments nutritifs de la poudre, ce qui entraîne des troubles et de mauvaises croissances chez les animaux.

Pour remédier à cet inconvénient le document FR2739751 propose une installation qui met en oeuvre une autre méthode permettant la préparation de doses alimentaires pour les animaux, ladite installation comprenant une cuve d'attente, des moyens pour transvaser dans ladite cuve d'attente l'aliment préalablement préparé dans la cuve de préparation et des moyens pour distribuer auxdites stations d'alimentation, sous forme de doses, l'aliment contenu dans ladite cuve d'attente. Les doses alimentaires sont préparées au moyen d'une unité de dosage comprenant une cuve de dosage, et des moyens pour la remplir. En outre chaque station d'alimentation est pourvue d'un détecteur d'animal délivrant un signal représentatif de son identité et d'un biberon associé à une sonde de niveau qui, lorsqu'elle détecte un niveau bas correspondant à la fin d'une dose, commande la distribution d'une nouvelle dose dans le biberon.

Cependant cette installation ne permet pas de mesurer la dose alimentaire ingérée par l'animal, ce qui engendre une erreur sur la quantité effectivement absorbée par celui-ci. En outre, l'animal peut sortir à n'importe quel moment de la station d'alimentation sans avoir bu la quantité d'aliment qui lui est nécessaire, par exemple lorsqu'il est poussé au dehors par un autre animal.

Le document NEDAP VC XP002103995 décrit une station d'alimentation pour des animaux tels que des veaux permettant de leur distribuer des aliments liquides au moyen d'une tétine rétractable permettant de faire sortir l'animal hors de la station, une fois l'alimentation terminée.

Toutefois, dans ce système, l'animal qui est en train de boire voit tout à coup la tétine disparaître vers l'avant et se met alors à la chercher encombrant la zone de buvée et empêchant ses congénères de boire.

La présence d'une personne équipée d'une cravache ou d'une baguette est alors nécessaire pour repousser le veau ce qui devient impossible à gérer avec un nombre élevé de passages d'animaux dans une journée.

En outre, les stations actuelles ne comportent aucun système de nettoyage et présentent donc des risques de contamination pour les animaux et même pour les hommes.

La présente invention a pour but de remédier à ces inconvénients en proposant une station d'alimentation qui permet de connaître exactement la dose de liquide ingérée par l'animal et de le faire sortir de ladite station, une fois son alimentation terminée.

La station d'alimentation selon l'invention est du type comprenant d'une part au moins un moyen d'alimentation destiné à alimenter un animal identifié, des moyens permettant de connaître exactement la quantité de produit alimentaire ingéré par ledit animal et d'autre part des moyens permettant de faire sortir l'animal hors de la station d'alimentation, une fois son alimentation terminée, une unité centrale électronique de gestion de ladite station d'alimentation, et se caractérise en ce que les moyens pour faire sortir l'animal de la station se présentent sous la forme d'un moyen de poussée mobile en translation ou en pivotement exerçant une poussée sur l'animal l'obligeant à sortir rapidement de la station.

Conformément à l'invention la station d'alimentation comprend d'une part des moyens de guidage permettant de délimiter un couloir pour diriger l'animal vers le moyen d'alimentation, et d'autre part des moyens de détection de sa présence dans ledit couloir délivrant à l'unité centrale un code d'identification de l'animal.

Conformément à l'invention le moyen d'alimentation est relié par un moyen d'amenage du produit alimentaire à au moins un récipient contenant une certaine quantité de produit alimentaire.

Le produit alimentaire peut être un produit liquide ou un produit solide et le moyen d'amenage est alors respectivement un conduit ou un moyen de transport tel qu'une vis sans fin.

Selon une caractéristique additionnelle de l'invention le récipient repose sur un moyen de pesée qui permet de connaître la quantité exacte de produit ingéré par l'animal.

Dans un mode de réalisation préférentiel de l'invention le moyen d'alimentation est disposé dans une cabine d'alimentation de forme parallélépipédique rectangle qui comporte une ouverture d'accès permettant le passage de la tête d'un animal dans ladite cabine pour accéder audit moyen d'alimentation, ladite ouverture d'accès se situant à l'une des extrémités du couloir d'accès et étant fermée par une porte commandée en ouverture par une unité centrale de gestion, en fonction des paramètres d'identification de l'animal.

La cabine d'alimentation peut renfermer avantageusement un système de nettoyage constitué par exemple de buses de pulvérisation projetant dans la cabine un produit nettoyant contenant ou non des agents désinfectants.

Les moyens pour faire sortir l'animal hors de la station d'alimentation peuvent être un moyen de poussée mobile en translation ou en pivotement, par exemple sous l'effet d'un vérin commandé par l'unité centrale.

Le moyen de poussée peut être un panneau mobile comportant au moins une ouverture permettant le passage du moyen d'alimentation lorsque ledit panneau est en position de retrait.

Ledit panneau mobile peut constituer avantageusement la porte d'entrée de la cabine d'alimentation.

Les avantages et les caractéristiques de la présente invention ressortiront plus clairement de la description qui suit et qui se rapporte au dessin annexé, fourni à titre de simple illustration de l'invention, vis-à-vis de laquelle il ne présente aucun caractère limitatif.
- la figure 1 représente une vue en coupe longitudinale d'une station d'alimentation selon l'invention dans un mode de réalisation préférentiel.
- la figure 2 représente une vue schématique de la partie arrière de la cabine et des moyens permettant l'amenage du produit alimentaire dans le récipient et dans la tétine.

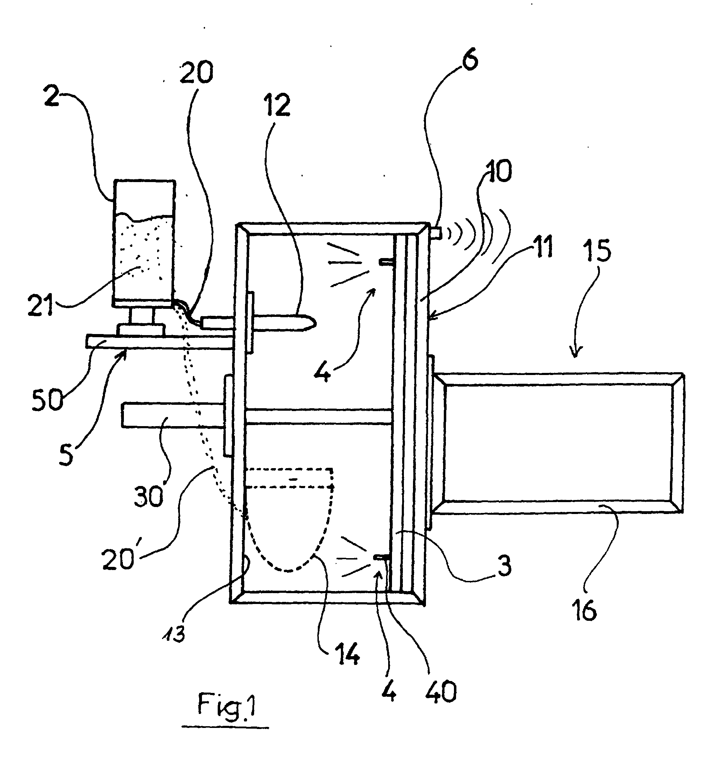

On peut voir sur la figure 1 qu'une station d'alimentation selon l'invention comprend dans un mode de réalisation préférentiel une cabine 10 de forme parallélépipédique rectangle destinée à recevoir par une ouverture d'accès 11 fermée par un panneau 3, la tête d'un animal tel qu'un veau, non représenté, pour son alimentation lorsque celui-ci a été identifié dans un couloir 15 d'accès à la cabine 10 délimité par des barrières latérales 16, dont une seulement est visible sur la figure, qui prolongent l'ouverture d'accès 11 et sont réglables en écartement en fonction de la largeur de l'animal.

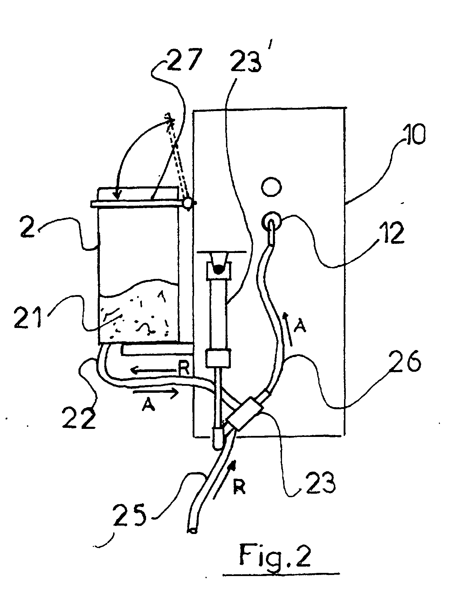

L'alimentation de l'animal est effectuée au moyen d'une tétine 12 solidarisée au fond 13 de la cabine 10 à une hauteur appropriée pour l'animal et reliée par un conduit flexible 20 à un récipient 2 contenant un liquide alimentaire 21. Le récipient 2 est relié à une unité de fabrication, non représenté, via un conduit 22, comme on peut le voir sur la figure 2, connecté à une vanne trois voies 23 solidarisée sur la face arrière 24 de la cabine d'alimentation 10, laquelle vanne est à l'unité de fabrication via un conduit 25 et à la tétine 12 via un conduit 26. La vanne 23 permet ainsi d'assurer, sous la commande de l'unité d'alimentation via un moyen hydraulique 23' ou par un moyen de commande manuel, la sélection:
- soit du remplissage du récipient 2 en produit alimentaire 21 s'écoulant dans le sens indiqué par R
- soit du mode alimentation de la tétine en produit alimentaire 21, contenu dans le récipient 2, s'écoulant dans le sens indiqué par A.

La pompe, non représentée, qui permet d'envoyer le produit alimentraire 21 dans le récipient 2 est adaptée avantageusement pour renvoyer le produit 21 à l'unité de fabrication lorsque celui- ci, par exemple, est froid.

Des moyens de détection 6 de la présence de l'animal dans le couloir 15 permettent, de manière connue, d'identifier celui-ci et de communiquer, à une unité centrale électronique, non représentée, pour la gestion de la station, un code d'identification de l'animal servant à l'adressage d'une base de donnée, également non représentée, permettant notamment à l'unité centrale, en fonction des paramètres correspondant au code d'identification de l'animal, d'autoriser l'accès à la cabine 10 à l'animal identifié.

On peut voir également que le récipient 2 est disposé à l'extérieur de la cabine 10 repose sur le plateau 50 d'une balance 5 et est maintenu par un arceau 27 monté pivotant sur la cabine 10, laquelle balance 5 est reliée à l'unité centrale de gestion et permet de connaître en temps réel la quantité exacte de produit alimentaire 21 ingéré par l'animal.

Le panneau 3 qui forme une porte d'accès dans la cabine 10 de la station a également comme fonction, par un déplacement en translation, sous l'effet d'un vérin 30 commandée par l'unité centrale, selon une direction perpendiculaire à son plan parallèle au plan de l'ouverture d'accès 11, d'effectuer une poussée sur l'animal et notamment une impulsion de recul l'incitant à sortir rapidement de la station.

Le moyen de poussée formé par le panneau 3 pourrait également être conçu de manière à se déplacer jusque dans le couloir 15 ou au delà effectuant alors une poussée sur l'animal jusqu'à sa sortie de la station.

Le panneau 3 pourrait aussi être monté pivotant autour d'un axe horizontal et perpendiculaire au sens d'accès de l'animal dans la cabine 10.

Ainsi lorsqu'un animal pénètre dans le couloir 15, il est immédiatement détecté et identifié et, si les paramètres relatifs à l'animal identifié correspondent à une autorisation d'alimentation de l'animal, l'unité centrale 7 commande le retrait de la porte 3 et donc l'ouverture de l'entrée 11 d'accès à la cabine 10.

On notera que la tétine 12 qui peut être escamotable peut être remplacée par un abreuvoir 14, représenté en traits interrompus, disposé à une hauteur inférieur à celle de la tétine. Ainsi la tétine 12 et l'abreuvoir 14 permettent à la station d'alimentation d'alimenter toutes les races animales.

En outre l'abreuvoir 14 pourrait également recevoir des aliments solides, et le conduit le reliant au récipient 2 contenant ces aliments solides comporterait alors un moyen de transport desdits aliments tel qu'une vis sans fin. Enfin l'abreuvoir 14 pourrait être relié à un récipient d'aliments liquides et à un récipient d'aliments solides.

On peut voir également que la cabine 10 renferme un système de nettoyage 4 constitué de buses 40 permettant de pulvériser dans la cabine 10, produit nettoyant liquide 41 contenant ou non des agents désinfectants. La cabine 10 peut également être fabriquée à partir de tubes métalliques soudés, dont l'écartement entre les tubes serait déterminé de manière que la tétine puisse passer à travers deux tubes voisins de la porte 3 pour être saisie par l'animal.

Le fonctionnement de la station d'alimentation selon l'invention est le suivant:

Lorsqu'un animal entre dans le couloir 15 de la station pour s'alimenter, celui-ci est détecté par les moyens de détection 6 qui vont reconnaître son numéro d'identification mémorisé dans l'unité centrale de gestion et répertorié dans une base de données, puis, après ouverture de l'entrée d'accès à la cabine 10, l'animal va ingérer par exemple par succion de la tétine 12 l'aliment 21 issu du récipient 2. Une fois atteint son quota, déterminé par le moyen de pesée 5, l'animal est poussé hors de la cabine 10 sous l'impulsion de recul donnée par le déplacement du panneau 3, qui vient au contact de l'animal, sous l'effet du vérin 30. Puis le système de nettoyage 4 est éventuellement mis en oeuvre.

## Revendications

1. Station d'alimentation permettant de distribuer de la nourriture et notamment des aliments liquides à des animaux tels que des veaux et destinée à être intégrée dans une installation de préparation et de distribution desdits aliments dans ladite station du type comprenant d'une part au moins un moyen d'alimentation (12, 14) destiné à alimenter un animal identifié, des moyens (5, 50) permettant de connaître exactement la quantité de produit alimentaire (21) ingéré par ledit animal et d'autre part des moyens (3, 30) permettant de faire sortir l'animal hors de la station d'alimentation, une fois son alimentation terminée, une unité centrale électronique de gestion de ladite station d'alimentation, **caractérisé en ce que** les moyens (3) pour faire sortir l'animal de la station se présentent sous la forme d'un moyen de poussée mobile en translation ou en pivotement exerçant une poussée sur l'animal l'obligeant à sortir rapidement de la station.

2. Station d'alimentation selon la revendication 1 **caractérisée en ce que** le moyen d'alimentation est une tétine (12) ou un abreuvoir (14) .

3. Station d'alimentation selon la revendication 1 ou la revendication 2 **caractérisée en ce que** le moyen de poussée est un panneau.

4. Station d'alimentation selon l'une quelconque des revendications précédentes **caractérisée en ce qu'**elle comprend d'une part des moyens (16) permettant de délimiter un couloir (15) pour diriger l'animal vers le moyen d'alimentation (12, 14), et d'autre part des moyens de détection (6) de la présence de l'animal dans ledit passage (15) délivrant un numéro d'identification à une unité centrale électronique de gestion de la station.

5. Station d'alimentation selon l'une quelconque des revendications précédentes **caractérisée en ce que** le moyen d'alimentation (12, 14) est relié par un moyen d'aménagé (20, 20') du produit alimentaire (21) à au moins un récipient (2) contenant une certaine quantité dudit produit alimentaire (21).

6. Station d'alimentation selon la revendication 5 **caractérisée en ce que** le produit alimentaire est un produit liquide (21) ou un produit solide et **en ce que** le moyen d'amenage est respectivement un conduit (20, 20') ou un moyen de transport de l'aliment.

7. Station d'alimentation selon la revendication 6 **caractérisée en ce que** le moyen de transport de l'aliment solide est une vis sans fin.

8. Station d'alimentation selon l'une quelconque des revendications 5 à 7 **caractérisée en ce que** le récipient repose sur un moyen de pesée (50) reliée à l'unité centrale et qui permet de connaître la quantité exacte de produit (21) ingéré par l'animal.

9. Station d'alimentation selon l'une quelconque des revendications 3 à 8 **caractérisée en ce que** le moyen d'alimentation (12, 14) est disposé dans une cabine d'alimentation (10) de forme parallélépipédique rectangle qui comporte une ouverture d'accès (11) permettant le passage de la tête d'un animal dans ladite cabine pour accéder audit moyen d'alimentation (12, 14), ladite ouverture d'accès (11) se situant à l'une des extrémités du couloir d'accès (15) et est fermée par le panneau (3) commandé en ouverture par l'unité centrale de gestion.

10. Station d'alimentation selon l'une quelconque des revendications précédentes **caractérisée en ce que** la station renferme en outre un système de nettoyage (4).

11. Station d'alimentation selon la revendication 10 **caractérisée en ce que** le système de nettoyage (4) de la station est constitué de buses de pulvérisation (40) projetant un produit nettoyant (41) contenant ou non des agents désinfectants.

12. Station d'alimentation selon l'une quelconque des revendications 3 à 11 **caractérisée en ce que** le panneau mobile (3) comprend au moins une ouverture permettant le passage du moyen d'alimentation (12, 14) lorsque ledit panneau (3) est en position de retrait.

## Patentansprüche

1. Fütterungsstation, die dazu dient, Futter und insbesondere flüssiges Futter an Tiere wie Kälber zu verteilen und dazu bestimmt ist, in eine Zubereitungs- und Verteilungsanlage besagten Futters an diese Station eingebaut zu werden, wobei diese Station so geartet ist, daß sie einerseits mindestens ein Fütterungsmittel (12, 14) beinhaltet, welches zur Fütterung eines identifizierten Tieres dient, sowie Mittel (5, 50), die es ermöglichen, die von diesem Tier aufgenommene Futtermenge (21) genau herauszufinden und andererseits Mittel (3, 30), die es ermöglichen, das Tier aus der Fütterungsstation herauszutreiben, sobald die Futteraufnahme beendet ist, einen elektronischen Steuerungs-Zentralrechner besagter Fütterungsstation, **dadurch gekennzeichnet, daß** die Mittel (3) zum Heraustreiben des Tieres sich in Form eines beweglichen, verschiebbaren oder drehbaren Schiebemittels präsentieren, welches eine Schubkraft auf das Tier ausübt und dieses dazu zwingt, die Station rasch zu verlassen.

2. Fütterungsstation gemäß Anspruch 1, **dadurch gekennzeichnet, daß** das Fütterungsmittel ein Sauger (11) oder eine Tränke (14) ist.

3. Fütterungsstation gemäß Anspruch 1 oder Anspruch 2, **dadurch gekennzeichnet, daß** es sich bei dem Schiebemittel um ein Paneel handelt.

4. Fütterungsstation gemäß einem beliebigen der obigen Ansprüche, **dadurch gekennzeichnet, daß** sie einerseits Mittel (16) beinhaltet, die dazu dienen, einen Korridor (15) abzugrenzen, um das Tier zum Fütterungsmittel (12, 14) zu leiten, und andererseits Detektionsmittel (6) bezüglich der Anwesenheit des Tieres in besagtem Korridor (15), welche eine Identifizierungsnummer an einen elektronischen Steuerungs-Zentralrechner der Station abgeben.

5. Fütterungsstation gemäß einem beliebigen der obigen Ansprüche, **dadurch gekennzeichnet, daß** das Fütterungsmittel (12, 14) mit Hilfe eines Zuleitungsmittels (20, 20') für Futter (21) mit einem Behältnis (2) verbunden ist, welches eine gewisse Menge besagten Futtermittels enthält.

6. Fütterungsstation gemäß Anspruch 5, **dadurch gekennzeichnet, daß** das Futtermittel ein flüssiges Produkt (21) oder ein festes Produkt ist, und daß es sich bei dem Zuleitungsmittel entweder um eine Rohrleitung (20, 20') oder um ein Fördermittel für das Futter handelt.

7. Fütterungsstation gemäß Anspruch 6, **dadurch gekennzeichnet, daß** das Fördermittel des festen Futters eine Förderschnecke ist.

8. Fütterungsstation gemäß einem beliebigen der Ansprüche 5 bis 7, **dadurch gekennzeichnet, daß** das Behältnis auf einem Wägemittel (50) ruht, welches mit dem elektronischen Steuerungs-Zentralrechner verbunden ist und welches die Möglichkeit bietet, die genaue vom Tier aufgenommene Produktmenge (21) zu erfahren.

9. Fütterungsstation gemäß einem beliebigen der Ansprüche 3 bis 8, **dadurch gekennzeichnet, daß** das Fütterungsmittel (12, 14) in einer Fütterungskabine (10) von quaderförmig-rechteckiger Form angeordnet ist, die eine Zugangsöffnung (11) zum Durchlaß des Kopfes eines Tieres in besagte Kabine beinhaltet, um an besagtes Fütterungsmittel (12, 14) zu gelangen, wobei sich diese Zugangsöffnung (11) an einem Ende des Zugangskorridors (15) befindet und von dem durch den Steuerungs-Zentralrechner angesteuerten Paneel (3) verschlossen wird.

10. Fütterungsstation gemäß einem beliebigen der obigen Ansprüche, **dadurch gekennzeichnet, daß** die Station darüber hinaus ein Reinigungssystem (4) beinhaltet.

11. Fütterungsstation gemäß Anspruch 10, **dadurch gekennzeichnet, daß** das Reinigungssystem (4) der Station aus Zerstäuberdüsen (40) besteht, welche ein Reinigungsmittel (41) verspritzen, das Desinfektionsmittel enthalten kann oder nicht.

12. Fütterungsstation gemäß einem beliebigen der Ansprüche 3 bis 11, **dadurch gekennzeichnet, daß** das bewegliche Paneel (3) mindestens eine Öffnung beinhaltet, die das Durchführen des Fütterungsmittels (12, 14) ermöglicht, wenn dieses Paneel sich in zurückgezogener Position befindet.

## Claims

1. Feeding station that dispenses feed, particularly liquid feed for animals such as calves, designed to be integrated into an installation for preparing and dispensing the said feed in the said station, including (a) feeding means (12, 14) designed to feed an identified animal, means (5, 50) for determining the exact quantity of feed (21) ingested by the animal and (b) means (3, 30) to make the animal leave the feeding station after it is fed, an electronic central processing unit that manages the said feeding station, **characterised in that** the means (3) to make the animal leave the feeding station take the form of mobile means that are displaced or pivoted to push the animal and make it leave the station rapidly.

2. Feeding station described in claim 1, **characterised in that** the feeding means take the form of a teat (1) or a drinking trough (14).

3. Feeding station described in claim 1 or 2, **characterised in that** the pushing means is a board.

4. Feeding station described in any of the claims above, **characterised in that** it includes (a) the means (16) to demarcate a corridor (15) to direct the animal towards the feeding means (12, 14) and (b) the means to detect (6) the presence of the animal in the said passage (15) and deliver an identification number to the central processing and management unit of the station.

5. Feeding station described in any of the claims above, **characterised in that** the feeding means (12, 14) are connected by means to convey (20, 20') the feed (21) to at least a container (2) containing a certain quantity of feed (21).

6. Feeding station described in claim 5, **characterised in that** the feed is a liquid (21) or a solid and that the conveying means are a pipe (20, 20') or other means to convey the feed.

7. Feeding station described in claim 6, **characterised in that** the means for conveying solid feed is a worm.

8. Feeding station described in any claim from 5 to 7, **characterised in that** the container is placed on weighing means (50) connected to the central processing unit in order to determine the exact quantity of feed (21) ingested by the animal.

9. Feeding station described in any claim from 3 to 8, **characterised in that** the feeding means (12, 14) are placed in a feeding booth (10) having a parallelepiped rectangle shape with an access opening (11) designed to let the head of the animal through into the said booth to gain access to the said feeding means (12, 14), the said access opening (11) being located at one of the ends of the access corridor (15) and closed by a board (3), the opening of which is controlled by the central management unit.

10. Feeding station described in any of the claims above, **characterised in that** the feeding station also contains a cleaning system (4).

11. Feeding station described in claim 10, **characterised in that** the cleaning system (4) of the feeding station is made up of spraying nozzles (40) that spray cleaning agent (41) containing disinfectant or otherwise.

12. Feeding station described in any of the claims from 3 to 11, **characterised in that** the mobile board (3) includes at least one opening to let through the feeding means (12, 14) when the said board (3) is in the back position.
